# EUROPÄISCHE PATENTSCHRIFT

(11) **EP 1 707 420 B1**
(45) Veröffentlichungstag und Bekanntmachung des Hinweises auf die Patenterteilung: **19.10.2011**
(21) Anmeldenummer: 06111185.2
(22) Anmeldetag: 15.03.2006
(51) Int. Cl.: B60K 11/04

(54) **Kühleranordnung**
Cooler arrangement
Aménagement d'un radiateur

(30) Priorität: 31.03.2005 DE 102005014614
(43) Veröffentlichungstag der Anmeldung: 04.10.2006
(73) Patentinhaber: Deere & Company, Moline, IL 61265-8098 (US)
(72) Erfinder: Schmitt, Harald, 66424 Homburg (DE)
(74) Vertreter: Holst, Sönke

(56) Entgegenhaltungen:
- EP-A1- 1 450 019
- GB-A- 2 332 507
- JP-A- 2000 212 995

## Beschreibung

Die Erfindung betrifft eine Kühleranordnung für ein Arbeitsfahrzeug, mit wenigstens einem Kühler und einer in einer ersten Führung gelagerten Führungsachse, wobei die Führungsachse relativ zu der ersten Führung in einer in der ersten Führung ausgebildeten Führungsbahn radial versetzbar angeordnet ist, derart, dass der Kühler durch Versetzen der Führungsachse relativ zur ersten Führung in eine zur Führungsachse radiale Richtung aus einer Betriebsstellung in eine Reinigungsstellung bringbar ist und wobei ein Haltebolzen vorgesehen ist, welcher entlang einer in einer zweiten Führung vorgesehenen Führungsbahn verschiebbar gelagert ist.

Landwirtschaftliche Arbeitsfahrzeuge, insbesondere Schlepper oder Laderfahrzeuge wie Teleskoplader, weisen heutzutage zunehmend hochtechnisierte und leistungsstärkere Aggregate auf. Die Bereitstellung leistungsstärkerer Aggregate erfordert ein zunehmendes Maß an Kühlleistung. Enge Bauraumverhältnisse, insbesondere im Bereich des Motorraums, erfordern eine kompakte Bauweise. Um das hohe Maß an Kühlleistung und gleichzeitig eine kompakte Bauweise bereitstellen zu können, werden Kühleranordnungen oftmals in Paketbauweise ausgebildet, bei der mehrere einzelne Fahrzeugkühler in enger Bauweise hintereinander angeordnet werden.

Aufgrund der rauen Arbeitsumgebung landwirtschaftlicher Arbeitsfahrzeuge sind insbesondere Verschmutzungen der Kühleranordnungen durch die Umgebungsluft unvermeidlich, so dass eine Reinigung der einzelnen Fahrzeugkühler in regelmäßigen Wartungsintervallen erforderlich ist. Zur Reinigung von in Paketbauweise angeordneten Fahrzeugkühlern müssen die einzelnen Fahrzeugkühler freigelegt werden, um den Zugang zu verdeckten Fahrzeugkühlerflächen zu ermöglichen. Bei Arbeitsfahrzeugen, bei denen diese Tätigkeit häufig ausgeführt werden muss, ist die Verwendung unterschiedlicher Schwenkvorrichtungen für die einzelnen Fahrzeugkühler üblich. Die Kühleranordnungen weisen dazu üblicherweise ein oder mehrere Schwenkachsen auf, um welche die einzelnen Fahrzeugkühler verschwenkbar sind. Diese Lösung erfordert einen relativ großen Schwenkwinkel, um einen guten Zugang zu den verdeckten Fahrzeugkühlerflächen zu gewährleisten. Der relativ große Schwenkwinkel wiederum erfordert, dass die verschwenkbaren Fahrzeugkühler nicht durch andere Komponenten im Motorraum verbaut sind, bzw. diese Komponenten gegebenenfalls zuvor zu entfernen sind. Doch auch bei relativ großem Schwenkwinkel ist der Zugang im Bereich der Schwenkachse oftmals sehr eingeschränkt. Um den relativ großen Schwenkwinkel für den einzelnen Fahrzeugkühler zu ermöglichen, ist eine entsprechende Nachführung von Anschlussleitungen erforderlich, was zu aufwändigen und kostenintensiven Konstruktionen führt. In der JP 2000 212995 A ist eine Kühleranordnung offenbart, welche vereinfachte Reinigungsmöglichkeiten bieten soll. Die Anordnung weist einen Ölkühler auf, der hinter einem Radiator angeordnet ist. Der Ölkühler kann mittels Führungsbolzen, die in einer mit dem Radiator verbundenen Führung verschiebbar gelagert sind, relativ zum Radiator verschoben werden, so dass der Abstand zwischen Radiator und Ölkühler zu Wartungszwecken veränderbar ist. Die in dieser Kühleranordnung verwendete Führung ist starr an dem Radiatorgehäuse angeschraubt und nimmt einen dadurch bedingten ungünstigen Bauraum ein.

Die der Erfindung zugrunde liegende Aufgabe wird darin gesehen, eine Kühleranordnung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Kühleranordnung der eingangs genannten Art derart ausgebildet, dass die zweite Führung (78) verschwenkbar angeordnet ist. Durch das radial zur Führungsachse gerichtete Versetzen der Schwenkachse um einen durch die Führungsbahn vorgeschriebenen Weg wird ein Freiraum geschaffen, der einen guten Zugang zu Reinigungs- bzw. Wartungszwecken zwischen zwei sich verdeckenden Flächen von Fahrzeugkühlern und/oder von Fahrzeugkühler und anderen Komponenten im Motorraum, insbesondere im Bereich der Schwenkachse, ermöglicht. Das Versetzen der Schwenkachse ermöglicht ein Abrücken eines gesamten Kühlers von einem benachbarten Kühler oder von einer benachbarten Komponente im Motorraum. Dies hat gegenüber bisherigen Lösungen den Vorteil, dass ein Verschwenken um die Führungsachse mit relativ großen Schwenkwinkeln nicht erforderlich ist, um einen Zugang zu den verdeckten Flächen zu gewährleisten. Die am Kühler montierten Schläuche, Leitungen, Rohre und dergleichen müssen unabhängig von der Position der Anbindung am Kühler eine nur geringe Nachführung und damit eine nur geringfügige Längenreserve aufweisen. Diese Lösung entfaltet ihre Vorteile insbesondere in engen und kompakt gestalteten Bauraumverhältnissen (z. B. in Kombination mit mehreren Kühlern oder in Kombination mit anderen vorgebauten Fahrzeugkomponenten), da für das Bewegen bzw. für das Versetzen des Kühlers ein nur sehr geringer Raum beansprucht wird. Die einfache Ausführung stellt eine kostengünstige Lösung dar. Der Haltebolzen ist entlang einer in einer zweiten Führung vorgesehenen Führungsbahn verschiebbar gelagert. Der Haltebolzen dient zur Abstützung des Kühlers, um ein Verschwenken bzw. Versetzen des Kühlers zu beschränken bzw. den Kühler dabei zusätzlich abzustützen. Das Führen des Haltebolzens in einer Führungsbahn der zweiten Führung begrenzt zum einen den Schwenkwinkel, mit dem der Kühler zusätzlich zum Versetzen verschwenkbar ist und hält den Kühler in seiner ausgeschwenkten Position, wenn dieser in die Reinigungsstellung verbracht wird. Die zweite Führung ist verschwenkbar angeordnet, so dass ein Versenken bzw. ein Einklappen der zweiten Führung in der Betriebsstellung des Kühlers ermöglicht wird.

In einer erweiterten Ausführungsform ist der Kühler um die Führungsachse verschwenkbar angeordnet, so dass in Kombination mit einem Verschwenken des Kühlers um die Schwenkachse eine noch komfortablere Reinigungsstellung des Kühlers realisierbar ist, wobei ein nur geringer Schwenkwinkel erforderlich ist, um den Zugang zu den verdeckten Kühlerflächen, auch im Bereich der Führungsachse, zu verbessern. Der Kühler kann dann durch Verschwenken um die Führungsachse und durch Versetzen der Führungsachse aus der Betriebsstellung in die Reinigungsstellung gebracht werden.

Die Kühleranordnung kann mit einem Trägerelement versehen sein, an dem sowohl der Kühler als auch andere Komponenten fixiert bzw. montiert sind. Hierbei ist es möglich das Trägerelement als Befestigungsrahmen auszubilden oder auch einzelne feststehende Bauteile oder andere Komponenten der Kühleranordnung als Trägerelement zu verwenden, wobei die Komponenten nicht an einem Befestigungsrahmen montiert sein müssen, sondern auch in einer Art Komponentenbauweise bzw. Modulbauweise miteinander verbunden werden können, in der einzelne aneinander befestigte Komponenten bzw. Module ein tragendes Gerüst bilden, ohne dass ein tragender Befestigungsrahmen verwendet wird. So kann die erste Führung beispielsweise direkt an einem als Trägerelement fungierenden Motorblock oder an einer anderen Komponente im Motorraum befestigt werden.

In einem bevorzugten Ausführungsbeispiel ist die erste Führung am Trägerelement, beispielsweise an einem Befestigungsrahmen befestigt, wobei, wie schon erwähnt, die Befestigung der ersten Führung auch an einer anderen Komponente in Komponentenbauweise bzw. Modulbauweise erfolgen kann. Bei diesem Ausführungsbeispiel ist die Führungsachse am Kühler befestigt, so dass die Führungsachse samt Kühler relativ zu der ersten Führung radial versetzt werden kann.

In einem alternativen Ausführungsbeispiel ist die Führungsachse am Trägerelement, beispielsweise an einem Befestigungsrahmen befestigt. Hierbei ist dann die erste Führung am Kühler befestigt, so dass bei diesem Ausführungsbeispiel die Führungsachse relativ zu der ersten Führung samt Kühler radial versetzt werden kann. Auch hier kann die Befestigung der Führungsachse an anderen Trägerelementen bzw. an Komponenten anstatt an einem Befestigungsrahmen erfolgen.

Die in der ersten Führung ausgebildete Führungsbahn weist wenigstens eine Einbuchtung auf, in welche die Führungsachse einrastbar ist. Die Einbuchtung kann dabei eine Vertiefung darstellen, in die die Führungsachse geführt und durch ihre Anlage fixiert wird, wobei die Einbuchtung bzw. Vertiefung in der Führungsbahn je nach Anordnung der Führungsachse und der ersten Führung im Wesentlichen nach unten oder nach oben ausgebildet sein kann. Beispielsweise sollte bei Versetzen der Führungsachse samt Kühler relativ zur ersten Führung die Einbuchtung nach unten erfolgen, um durch die auf die Führungsbahn ausgeübte Gewichtskraft des Kühlers eine Anlage der Führungsachse in der Einbuchtung zu erwirken. Hierbei sind selbstverständlich auch andere Lösungen denkbar, durch die die Führungsachse in der Führungsbahn fixierbar ist, beispielsweise eine Fixierung durch eine Verzahnung in der Führungsbahn oder durch ein Verschraubung bzw. Verspannung der ersten Führung mit der Führungsachse.

In einer bevorzugten Ausgestaltung der Erfindung weist die Führungsbahn eine erste und eine zweite Einbuchtung auf, welche jeweils an einem Ende der Führungsbahn ausgebildet ist. So wird durch diese Einbuchtungen jeweils eine Endlage der Führungsachse in der Führungsbahn vorgegeben, wobei durch die Einbuchtungen jeweils an den Enden der Führungsbahn eine Lagesicherung in Betriebsstellung und in Reinigungsstellung geschaffen wird. Wie zuvor erwähnt, sind diese Einbuchtungen vorzugsweise nach unten ausgebildet, wenn die Führungsachse samt Kühler versetzbar ist. Sollte die erfindungsgemäße Kühleranordnung derart ausgebildet sein, dass die erste Führung samt Kühler versetzbar ist, so ist es sinnvoll die Einbuchtungen nach oben auszubilden, so dass durch die Gewichtskraft des Kühlers eine entsprechende Einrastung bzw. Arretierung der Führungsachse in der Führungsbahn erfolgen kann.

Die Führungsbahn kann hier ebenfalls mit einer oder mehreren Einbuchtungen versehen sein, in die der Haltebolzen einrastbar ist bzw. zur Anlage kommt. Dadurch kann eine Arretierung bzw. Fixierung oder ein Einrasten des Kühlers in seiner Reinigungsstellung oder Betriebsstellung, auf ähnliche Weise wie oben bereits beschrieben, erfolgen.

Die Anordnung der zweiten Führung und des Haltebolzens kann, wie schon zur Beschreibung der Anordnung der ersten Führung und der Führungsachse ausgeführt, auf verschiedene Art erfolgen. So kann beispielsweise die zweiten Führung an einem feststehenden Bauteil, beispielsweise ein weiteres Trägerelement oder eine weitere Komponente der Kühleranordnung, und der Haltebolzen am Kühler befestigt werden oder auch umgekehrt.

Um die verschwenkbare zweite Führung zu sichern, ist eine Fixierung vorgesehen, mit der ein verschwenkbares Ende der zweiten Führung an das Trägerelement oder an den Kühler fixiert wird. Eine derartige Fixierung kann durch eine Verschraubung oder durch eine Spannvorrichtung erfolgen. Ein Verschwenken des Kühlers in Reinigungsstellung erfolgt bei sachgemäßer Bedienung durch Ausklappen der zweiten Führung, so dass der Kühler in seiner Verschwenkten Position in Reinigungsstellung gehalten wird. Durch Fixieren der zweiten Führung gegen Verschwenken erfolgt somit auch eine Sicherung gegen Verschwenken des Kühlers.

Zusätzlich kann auch der Kühler gegen Verschwenken abgesichert werden, indem beispielsweise eine Fixiervorrichtung zwischen Kühler und Trägerelement vorgesehen ist. Dies kann beispielsweise durch eine mit dem Kühler und dem Trägerelement lösbar verbundene Lasche erfolgen. Eine derartige Verbindung kann beispielsweise ebenfalls durch eine Verschraubung oder durch eine Spannvorrichtung erfolgen.

In einer weiteren Ausführungsform der Erfindung weist die Kühleranordnung mehrere Kühler auf, die hintereinander angeordnet sind, wobei wenigstens ein erster Kühler einen zweiten Kühler in der Betriebsstellung wenigstens teilweise verdeckt. Es können auch andere Komponenten im Motorraum mit den oben beschriebenen Führungen und Führungsachsen versehen sein, um ein Versetzen bzw. Verschwenken anderer Komponenten im Motorraum in eine Reinigungsstellung auf ähnliche Weise zu ermöglichen. So kann eine Kühleranordnung beispielsweise auch zwei oder mehr Kühler aufweisen, die mit derartigen Führungen und Führungsachsen versehen sind.

Derartige Kühleranordnungen werden vorzugsweise in Arbeitsfahrzeugen, insbesondere in landwirtschaftlichen Arbeitsfahrzeugen, wie z. B. Schlepper, Laderfahrzeuge oder Erntemaschinen eingesetzt. Es ist jedoch auch denkbar, derartige Kühleranordnungen in anderen Arbeitsfahrzeugen, beispielsweise in Forstmaschinen oder in Baumaschinen einzusetzen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht eines Arbeitsfahrzeugs mit einer erfindungsgemäßen Kühleranordnung,
- Fig. 2: eine Seitenansicht der erfindungsgemäßen Kühleranordnung in einer Betriebsstellung und
- Fig. 3: eine Seitenansicht der erfindungsgemäßen Kühleranordnung in einer Reinigungsstellung.

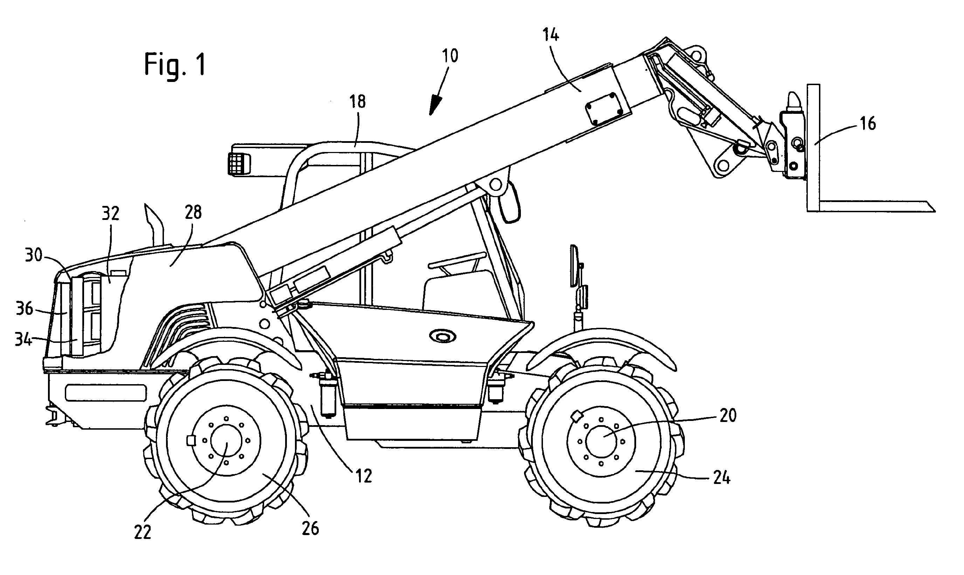

Figur 1 zeigt ein Arbeitsfahrzeug 10 in Form eines Teleskopladers. Das Arbeitsfahrzeug 10 weist einen Rahmen 12, einen Ausleger 14, mit einem damit verbundenen Arbeitswerkzeug 16, eine Kabine 18 sowie vordere und hintere Achsen 20, 22 mit daran angeordneten Rädern 24, 26 auf. Ferner weist das Arbeitsfahrzeug 10 einen Motorraum 28 auf, in dem eine erfindungsgemäße Kühleranordnung 30, ein Motor 32 sowie andere für den Betrieb des Arbeitsfahrzeugs 10 benötigte Aggregate (nicht gezeigt) angeordnet sind. Die Kühleranordnung 30 ist mit dem Rahmen 12 des Arbeitsfahrzeugs 10 verbunden und wird durch diesen getragen bzw. abgestützt.

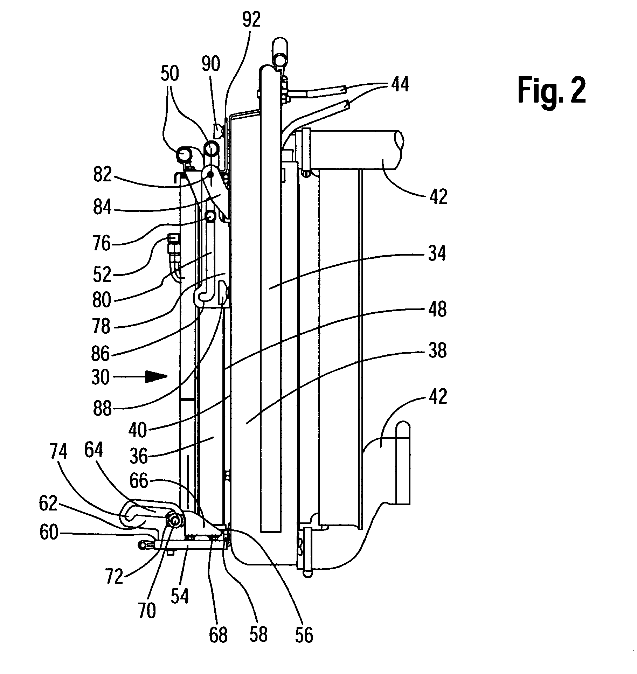

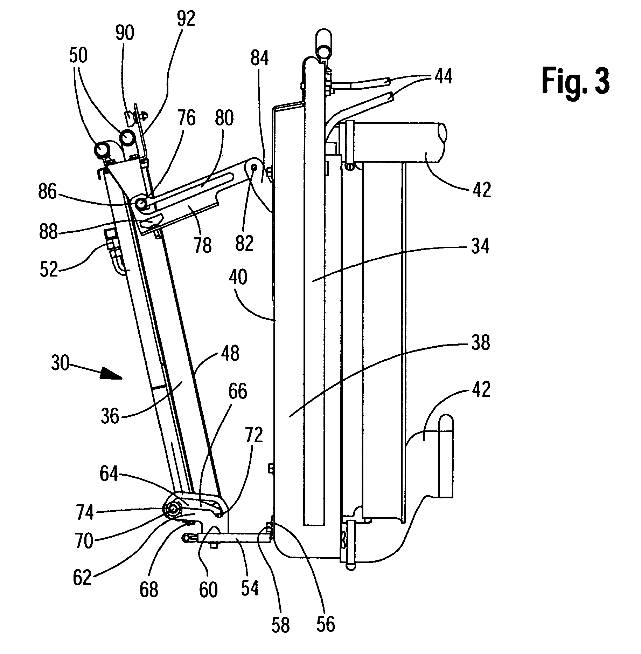

Wie in den Figuren 2 und 3 deutlicher zu sehen ist, weist die Kühleranordnung 30 einen ersten Kühler 34 und einen zweiten Kühler 36 auf. Figur 2 zeigt die Kühleranordnung 30 in einer Betriebsstellung. Der erste Kühler 34 und der zweite Kühler 36 sind in einer Paketbauweise hintereinander angeordnet.

Der erste Kühler 34 weist einen Kühlkörper 38 mit einer in Richtung des zweiten Kühlers 36 weisenden ersten Kühlerfläche 40 auf. Der erste Kühler 34 ist mittels Kühlerschläuche 42 und Verbindungsleitungen bzw. -rohre 44 mit den Aggregaten (nicht gezeigt) bzw. dem Motor 32 des Arbeitsfahrzeugs 10 verbunden.

Der zweite Kühler 36 weist einen Kühlkörper 46 mit einer in Richtung des ersten Kühlers 34 weisenden zweiten Kühlerfläche 48 auf. Der erste Kühler 34 ist ebenfalls mittels Kühlerschläuche 50 und Verbindungsleitungen bzw. -rohre 52 mit den Aggregaten (nicht gezeigt) bzw. dem Motor 32 des Arbeitsfahrzeugs 10 verbunden.

Der erste und der zweite Kühler 34, 36 sind über ein Trägerelement 54 miteinander verbunden. Das Trägerelement 54 ist als rechtwinkliges Blech ausgebildet, welches sich über die gesamte Breite des zweiten Kühlers 36 erstreckt und an einer vertikal zur Bodenoberfläche ausgerichteten Seitenfläche 56 mittels Schrauben 58 an den ersten Kühler 34 auf der ersten Kühlerfläche 40 montiert. Auf einer horizontal ausgerichteten Seitenfläche 60 des Trägerelements 54 ist seitlich zum zweiten Kühler 36 eine erste Führung 62 angebracht. Die erste Führung 62 ist als blechförmige Lasche ausgebildet, welche mit einer Führungsbahn 64 versehen ist. Eine derartige erste Führung 62 ist beidseitig des zweiten Kühlers 36 angebracht.

Der zweite Kühler 36 weist ein Verbindungsblech 66 auf, welches an der Unterseite und seitlich des zweiten Kühlers 36 mittels Schrauben 68 angebracht ist. Ausgehend von dem Verbindungsblech 66 erstreckt sich eine Führungsachse 70, welche über das Verbindungsblech 66 fest mit dem zweiten Kühler 36 verbunden ist. Das Verbindungsblech 66 dient somit als Verbindungsteil zwischen der Führungsachse 70 und dem zweiten Kühler 36. Ein derartiges Verbindungsblech 66 ist beidseitig des zweiten Kühlers 36 angebracht. Die Führungsachse 70 kann als Führungsbolzen, welcher fest mit dem Verbindungsblech 66 verbunden ist und sich nach außen erstreckt, oder auch als durchgehende Achse ausgebildet sein, welche sich durch die Verbindungsbleche 66 beidseitig des zweiten Kühlers 36 über die gesamte Breite des zweiten Kühlers erstreckt.

Die Führungsachse 70 erstreckt sich beidseitig des zweiten Kühlers 36 durch die in der ersten Führung 62 ausgebildeten Führungsbahn 64, so dass der zweite Kühler 36 zum einen entlang der Führungsbahn 64 verschiebbar bzw. versetzbar ist und zum anderen auch um die Führungsachse 70 verschwenkbar angeordnet ist. Die Führungsbahn 64 weist an ihren beiden Endbereichen eine erste und eine zweite Einbuchtung 72, 74 auf, die sich im Wesentlichen nach unten erstrecken, so dass die Führungsachse 70 durch das Gewicht des zweiten Kühlers 36, welches auf der Führungsachse 70 lastet, in die Einbuchtungen 72, 74 gedrängt wird. Dadurch wird eine Art Arretierung geschaffen, mit der die Führungsachse 70 in zwei verschiedenen Stellungen einrastbar bzw. arretierbar ist.

In der in Figur 2 dargestellten Position befindet sich die Führungsachse 70 und damit auch der zweite Kühler 36 in einer Betriebsstellung, d. h. in einer Stellung, in der die Kühleranordnung 30 während des Betriebes des Arbeitsfahrzeugs 10 betrieben wird. In dieser Betriebsstellung befindet sich die Führungsachse 70 in der ersten Einbuchtung 72. Soll die Kühleranordnung 30 zu Wartungszwecken in eine Reinigungsstellung verbracht werden, dann kann der zweite Kühler durch Herausheben der Führungsachse 70 aus der ersten Einbuchtung 72 und durch Versetzen bzw. Verschieben der Führungsachse 70 entlang der Führungsbahn 64, also relativ zur ersten Führung 62, und durch Anlegen bzw. Herablassen der Führungsachse 70 in die zweite Einbuchtung 74, in die Reinigungsstellung verbracht werden, wie es in Figur 3 dargestellt ist.

Zusätzlich kann der zweite Kühler 36 um die Führungsachse 70 verschwenkt werden, so dass ein Öffnungswinkel oder Schwenkwinkel einstellbar ist, wodurch die Zugänglichkeit zu den Kühlerflächen 40, 48 noch verbessert bzw. erhöht werden kann. Das Verschwenken des zweiten Kühlers 36 wird durch einen seitlich angeordneten Haltebolzen 76, welcher fest mit dem zweiten Kühler 36 verbunden ist und welcher mit einer zweiten Führung 78 in Eingriff tritt, begrenzt.

Die zweite Führung 78 ist als blechförmige Lasche ausgebildet, welche mit einer Führungsbahn 80 versehen ist, in der der Haltebolzen 76 verschiebbar geführt wird. Die zweite Führung 78 ist mit einem Ende über eine Schwenkverbindung 82 schwenkbar mit einem Halteblech 84 verbunden, welches an die erste Kühlerfläche 40 montiert ist. An dem gegenüberliegenden Ende der zweiten Führung 78 ist in der Führungsbahn 80 eine sich nach oben erstreckende Einbuchtung 86 vorgesehen, die in ähnlicher Weise wie die Einbuchtungen 72, 74 der ersten Führung 62 eine Arretierung darstellt. Durch Verschwenken des zweiten Kühlers 36 wird der Haltebolzen 76 entlang der Führungsbahn 80 verschoben bzw. bewegt und drängt die zweite Führung 78 über die Schwenkverbindung 82 in eine zunehmend horizontale Lage (siehe Figur 3). Sobald der Haltebolzen 76 seine Endlage in der Führungsbahn 80 erreicht, bewegt sich die zweite Führung 78 aufgrund ihres Eigengewichts abwärts, so dass der Haltebolzen 76 in die Einbuchtung gelangt und den zweiten Kühler 36 in der verschwenkten Reinigungsstellung bzw. verbesserten Reinigungsstellung arretiert. Zum Lösen und Verschwenken des zweiten Kühlers 36 in die Betriebsstellung muss die zweite Führung 78 nur leicht angehoben werden, so dass der Haltebolzen 76 aus der Einbuchtung 86 in die Führungsbahn 80 gelangt. Wird der zweite Kühler 36 wieder in Richtung der Betriebsstellung verschwenkt, dann drängt der Haltebolzen 76 die zweite Führung 78 über die Schwenkverbindung 82 in eine zunehmend vertikale Lage. Durch zusätzliches Versetzen der Führungsachse 70, aus der zweiten Einbuchtung 74 (Reinigungsstellung, Figur 3) in die erste Einbuchtung 72 (Betriebsstellung, Figur 2), gelangt die zweite Führung 78 in ihre Ausgangslage zurück und kommt in einer vertikalen Stellung auf der ersten Kühleroberfläche 40 zum Anliegen (siehe Figur 2).

Um ein ungewolltes Versetzen bzw. Verschwenken des zweiten Kühlers 36 zu verhindern, was beispielsweise durch Vibrationen oder durch ruckartige Bewegungen des Arbeitsfahrzeugs 10 erfolgen kann, ist die zweite Führung 78 mit einer ersten Fixierung 88 in Form eines Schnellverschlusses versehen. Die Fixierung 88 ist derart ausgebildet, das die auf der ersten Kühlerfläche 40 zur Anlage gekommene zweite Führung 78 mit dem ersten Kühler 34 lösbar verbunden und somit in ihrer Ausgangslage (vertikale Stellung, Figur 2) fixiert wird. Durch Fixierung der zweiten Führung 78 in ihrer Ausgangslage, kann die zweite Führung 78 nicht verschwenkt werden, was zur Folge hat, dass sich der Haltebolzen 76 nicht entlang der Führungsbahn 80 bewegt werden kann. Eine zusätzliche Sicherung der Kühleranordnung ist durch eine zweite Fixierung 90 gegeben. Die zweite Fixierung 90 ist ebenfalls in Form eines Schnellverschlusses ausgebildet und verbindet lösbar ein auf der Oberseite des zweiten Kühlers 36 befestigtes Halteblech 92 mit der ersten Kühleroberfläche 40 des ersten Kühlers 34. Erst durch Lösen beider Fixierungen 88, 90 kann die Kühleranordnung 30 bzw. der zweite Kühler 36 aus der Betriebsstellung in die Reinigungsstellung verbracht werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise die zweite Führung 78 als feststehende, nicht schwenkbare Führung mit einer kreisbogenartigen Führungsbahn ausgebildet sein. Ferner kann das Trägerelement 54 nicht als einzelnes Teil, sondern als ein Teil eines Befestigungsrahmens ausgebildet sein, der die gesamte Kühleranordnung 30 oder nur den ersten oder zweiten Kühler trägt.

## Patentansprüche

1. Kühleranordnung (30) für ein Arbeitsfahrzeug (10), mit wenigstens einem Kühler (36) und einer in einer ersten Führung (62) gelagerten Führungsachse (70), wobei die Führungsachse (70) relativ zu der ersten Führung (62) in einer in der ersten Führung (62) ausgebildeten Führungsbahn (64) radial versetzbar angeordnet ist, derart, dass der Kühler (36) durch Versetzen der Führungsachse (70) relativ zur ersten Führung (62) in eine zur Führungsachse (70) radiale Richtung aus einer Betriebsstellung in eine Reinigungsstellung bringbar ist und wobei ein Haltebolzen (76) vorgesehen ist, welcher entlang einer in einer zweiten Führung (78) vorgesehenen Führungsbahn (80) verschiebbar gelagert ist, **dadurch gekennzeichnet, dass** die zweite Führung (78) verschwenkbar angeordnet ist.

2. Kühleranordnung (30) nach Anspruch 1, **dadurch gekennzeichnet, dass** der Kühler (36) um die Führungsachse (70) verschwenkbar angeordnet ist und durch Verschwenken um die Führungsachse (70) und durch Versetzen der Führungsachse (70) aus der Betriebsstellung in eine Reinigungsstellung bringbar ist.

3. Kühleranordnung (30) nach Anspruch 1 oder 2, **dadurch gekennzeichnet, dass** ein Trägerelement (54) vorgesehen ist.

4. Kühleranordnung (30) nach Anspruch 3, **dadurch gekennzeichnet, dass** die erste Führung (62) an dem Trägerelement (54) und die Führungsachse (70) am Kühler (36) befestigt ist.

5. Kühleranordnung (30) nach Anspruch 3, **dadurch gekennzeichnet, dass** die Führungsachse (70) an dem Trägerelement (54) und die erste Führung (62) am Kühler (36) befestigt ist.

6. Kühleranordnung (30) nach einem der Ansprüche 1 bis 5, **dadurch gekennzeichnet, dass** die Führungsbahn (64) wenigstens eine Einbuchtung (72, 74) aufweist, in welche die Führungsachse (70) einrastbar ist.

7. Kühleranordnung (30) nach Anspruch 6, **dadurch gekennzeichnet, dass** die Führungsbahn (70) eine erste und eine zweite Einbuchtung (72, 74) aufweist, welche jeweils an einem Ende der Führungsbahn (70) ausgebildet ist.

8. Kühleranordnung (30) nach einem der Ansprüche 1 bis 7, **dadurch gekennzeichnet, dass** die Führungsbahn (80) der zweiten Führung (78) eine Einbuchtung (86) aufweist, in die der Haltebolzen (76) einrastbar ist.

9. Kühleranordnung (30) nach einem der Ansprüche 1 bis 8, **dadurch gekennzeichnet, dass** die zweite Führung (78) an einem feststehenden Bauteil (34) und der Haltebolzen (76) am Kühler (36) oder die zweite Führung (78) am Kühler (36) und der Haltebolzen (76) an einem feststehenden Bauteil (34) befestigt ist.

10. Kühleranordnung (30) nach einem der Ansprüche 1 bis 9, **dadurch gekennzeichnet, dass** die zweite Führung (78) mittels einer Fixierung (88) gegen Verschwenken fixierbar ist.

11. Kühleranordnung (30) nach einem der Ansprüche 1 bis 10, **dadurch gekennzeichnet, dass** der Kühler (36) mittels einer Fixierung (90) gegen Verschwenken fixierbar ist.

12. Kühleranordnung (30) nach einem der Ansprüche 1 bis 11, **dadurch gekennzeichnet, dass** wenigstens ein zweiter Kühler (34) vorgesehen ist, wobei der erste und der wenigstens zweite Kühler (36, 34) hintereinander angeordnet sind und der erste Kühler (36) den wenigstens zweiten Kühler (34) in der Betriebsstellung wenigstens teilweise verdeckt.

13. Arbeitsfahrzeug (10), insbesondere landwirtschaftliches Arbeitsfahrzeug, wie Schlepper, Laderfahrzeug oder Erntemaschine, mit einer Kühleranordnung (30) gemäß einem der Ansprüche 1 bis 12.

## Claims

1. Radiator arrangement (30) for a working vehicle (10), with at least one radiator (36) and with a guide axle (70) mounted in a first guide (62), the guide axle (70) being arranged so as to be radially displaceable in relation to the first guide (62) in a guide track (64) formed in the first guide (62), in such a way that, by means of a displacement of the guide axle (70) in relation to the first guide (62) in a direction radial to the guide axle (70), the radiator (36) can be brought out of an operating position into a cleaning position, and a holding bolt (76) being provided, which is mounted so as to be shiftable along a guide track (80) provided in a second guide (78), **characterized in that** the second guide (78) is arranged pivotably.

2. Radiator arrangement (30) according to Claim 1, **characterized in that** the radiator (36) is arranged pivotably about the guide axle (70) and can be brought out of the operating position into a cleaning position by being pivoted about the guide axle (70) and as a result of the displacement of the guide axle (70).

3. Radiator arrangement (30) according to Claim 1 or 2, **characterized in that** a carrier element (54) is provided.

4. Radiator arrangement (30) according to Claim 3, **characterized in that** the first guide (62) is fastened to the carrier element (54) and the guide axle (70) is fastened to the radiator (36).

5. Radiator arrangement (30) according to Claim 3, **characterized in that** the guide axle (70) is fastened to the carrier element (54) and the first guide (62) is fastened to the radiator (36).

6. Radiator arrangement (30) according to one of Claims 1 to 5, **characterized in that** the guide track (64) has at least one indentation (72, 74) into which the guide axle (70) can be latched.

7. Radiator arrangement (30) according to Claim 6, **characterized in that** the guide track (70) has a first and a second indentation (72, 74) which are formed in each case at one end of the guide track (70).

8. Radiator arrangement (30) according to one of Claims 1 to 7, **characterized in that** the guide track (80) of the second guide (78) has an indentation (86) into which the holding bolt (76) can be latched.

9. Radiator arrangement (30) according to one of Claims 1 to 8, **characterized in that** the second guide (78) is fastened to a fixed component (34) and the holding bolt (76) is fastened to the radiator (36), or the second guide (78) is fastened to the radiator (36) and the holding bolt (76) is fastened to a fixed component (34).

10. Radiator arrangement (30) according to one of Claims 1 to 9, **characterized in that** the second guide (78) can be fixed against pivoting by means of a fixing (88).

11. Radiator arrangement (30) according to one of Claims 1 to 10, **characterized in that** the radiator (36) can be fixed against pivoting by means of a fixing (90).

12. Radiator arrangement (30) according to one of Claims 1 to 11, **characterized in that** at least one second radiator (34) is provided, the first and the at least second radiator (36, 34) being arranged one behind the other, and the first radiator (36) at least partially concealing the at least second radiator (34) in the operating position.

13. Working vehicle (10), in particular agricultural working vehicle, such as a tractor, loader vehicle or harvesting machine, having a radiator arrangement (30) according to one of Claims 1 to 12.

## Revendications

1. Agencement de radiateur (30) pour un véhicule de travail (10), comprenant au moins un radiateur (36) et un axe de guidage (70) monté dans un premier guide (62), l'axe de guidage (70) étant disposé de manière à pouvoir être décalé radialement par rapport au premier guide (62) dans une piste de guidage (64) réalisée dans le premier guide (62), de telle sorte que le radiateur (36) puisse être amené par décalage de l'axe de guidage (70) par rapport au premier guide (62) dans une direction radiale par rapport à l'axe de guidage (70) depuis une position de fonctionnement jusqu'à une position de nettoyage, et un boulon de retenue (76) étant prévu, lequel est monté de manière déplaçable le long d'une piste de guidage (80) prévue dans un deuxième guide (78), **caractérisé en ce que** le deuxième guide (78) est disposé de manière pivotante.

2. Agencement de radiateur (30) selon la revendication 1, **caractérisé en ce que** le radiateur (36) est disposé de manière à pouvoir pivoter autour de l'axe de guidage (70), et peut être amené par pivotement autour de l'axe de guidage (70) et par décalage de l'axe de guidage (70) depuis la position de fonctionnement jusqu'à une position de nettoyage.

3. Agencement de radiateur (30) selon la revendication 1 ou 2, **caractérisé en ce qu'**il est prévu un élément de support (54).

4. Agencement de radiateur (30) selon la revendication 3, **caractérisé en ce que** le premier guide (62) est fixé sur l'élément de support (54) et l'axe de guidage (70) est fixé sur le radiateur (36).

5. Agencement de radiateur (30) selon la revendication 3, **caractérisé en ce que** l'axe de guidage (70) est fixé sur l'élément de support (54) et le premier guide (62) est fixé sur le radiateur (36).

6. Agencement de radiateur (30) selon l'une quelconque des revendications 1 à 5, **caractérisé en ce que** la piste de guidage (64) présente au moins un renfoncement (72, 74) dans lequel peut s'encliqueter l'axe de guidage (70).

7. Agencement de radiateur (30) selon la revendication 6, **caractérisé en ce que** la piste de guidage (70) présente un premier et un deuxième renfoncement (72, 74), qui est réalisé à chaque fois à une extrémité de la piste de guidage (70).

8. Agencement de radiateur (30) selon l'une quelconque des revendications 1 à 7, **caractérisé en ce que** la piste de guidage (80) du deuxième guide (78) présente un renfoncement (86) dans lequel peut s'encliqueter le boulon de retenue (76).

9. Agencement de radiateur (30) selon l'une quelconque des revendications 1 à 8, **caractérisé en ce que** le deuxième guide (78) est fixé sur un composant fixe (34) et le boulon de retenue (76) est fixé sur le radiateur (36) ou le deuxième guide (78) est fixé sur le radiateur (36) et le boulon de retenue (76) est fixé sur un composant fixe (34).

10. Agencement de radiateur (30) selon l'une quelconque des revendications 1 à 9, **caractérisé en ce que** le deuxième guide (78) peut être fixé contre un pivotement au moyen d'une fixation (88).

11. Agencement de radiateur (30) selon l'une quelconque des revendications 1 à 10, **caractérisé en ce que** le radiateur (36) peut être fixé contre un pivotement au moyen d'une fixation (90).

12. Agencement de radiateur (30) selon l'une quelconque des revendications 1 à 11, **caractérisé en ce qu'**au moins un deuxième radiateur (34) est prévu, le premier et l'au moins un deuxième radiateur (36, 34) étant disposés l'un derrière l'autre et le premier radiateur (36) recouvrant l'au moins un deuxième radiateur (34) au moins en partie dans la position de fonctionnement.

13. Véhicule de travail (10), notamment véhicule de travail agricole, comme un tracteur, un véhicule chargeur ou une moissonneuse, comprenant un agencement de radiateur (30) selon l'une quelconque des revendications 1 à 12.
